# EUROPÄISCHE PATENTSCHRIFT

(11) **EP 2 225 944 B1**
(45) Veröffentlichungstag und Bekanntmachung des Hinweises auf die Patenterteilung: **19.10.2011**
(21) Anmeldenummer: 10155130.7
(22) Anmeldetag: 02.03.2010
(51) Int. Cl.: A21D 13/00, A21D 15/02, A21C 15/00

(54) **Verfahren und Vorrichtung zur Herstellung flacher Backwaren mit offenporiger Unterseite**
Method and device for producing flat baked goods with an open pore lower side
Procédé et dispositif de fabrication de produits cuits plats dotés d'une face inférieure à ports ouverts

(30) Priorität: 02.03.2009 DE 102009011038
(43) Veröffentlichungstag der Anmeldung: 08.09.2010
(73) Patentinhaber: Dr. August Oetker Nahrungsmittel KG, 33617 Bielefeld (DE)
(72) Erfinder: Dr. Spiegel, Udo, 33619 Bielefeld (DE)
(74) Vertreter: Taruttis, Stefan Georg

(56) Entgegenhaltungen:
- EP-A1- 2 138 285
- EP-A2- 0 334 568
- DE-C1- 4 317 534
- US-A- 3 667 963
- US-A- 3 899 603

## Beschreibung

Die Erfindung betrifft ein Verfahren zur Herstellung flacher Backwaren, insbesondere von Teiglingen, z.B. Pizza, und eine zur Durchführung des Verfahrens geeignete Vorrichtung. Weiterhin betrifft die Erfindung flache Backwaren bzw. Teiglinge, die z.B. mit dem erfindungsgemäßen Verfahren hergestellt sind, die eine flache erste Oberfläche und eine dieser gegenüberliegende flache zweite Oberfläche aufweisen, die jeweils an die Oberfläche eines umfänglichen Randbereichs angrenzen. Erfindungsgemäß ist die erste Oberfläche offenporig, und die zweite Oberfläche ist wahlweise mit einem Trennmittel, beispielsweise Mehl, und vorzugsweise überdies mit einer Beschichtungsmasse beschichtet. Die auf der zweiten Oberfläche aufgeschichtete Beschichtungsmasse ist vorzugsweise auf wässriger Basis, beispielsweise wenn die Backware ein Pizzaboden ist, eine wässrige Soße, beispielsweise Tomatensoße; alternativ kann die auf der zweiten Oberfläche aufgetragene Beschichtungsmasse lipophil, z.B. eine Emulsion sein, beispielsweise eine Käsemasse. Die Erfindung betrifft insbesondere ein Verfahren zur kontinuierlichen Herstellung flacher Backwaren, bei dem eine homogene Teigmasse auf eine Unterlage ausgebreitet wird, insbesondere eine homogene Teigmasse mit darin verteilten Gasblasen und/oder mit darin verteiltem Treibmittel, vorzugsweise Hefeteig, wobei zwischen der ersten Oberfläche des Teigs und der angrenzenden Oberfläche der Unterlage ein Trennmittel aufgebracht ist, und insbesondere auch auf die der ersten Oberfläche des Teigs gegenüberliegende zweite Oberfläche ein Trennmittel aufgebracht ist.

### Stand der Technik

Die GB 2165436 A beschreibt die Herstellung von Pizzaböden durch Ausbringen von Hefeteig, Gärenlassen des Hefeteigs und Pressen des gegangenen Hefeteigs entweder vor oder nach dem Backen. Das Ausbringen des Teigs erfolgt entweder auf eine Unterlage, aus der Teiglinge ausgestochen werden, oder auf individuelle Formen.

Die EP 1 219 174 B1 beschreibt, dass durch Pressen eines gegangenen und portionierten Hefeteigs zwischen zwei Platten von 150-210°C für 0,1-2s bei einer Last von mindestens 350kg ein besonders knuspriger und weicher Teigling erhalten werde.

Die EP 0334568 A1 beschreibt die Herstellung eines Pizzabodens, der teilgebacken und anschließend in zwei Scheiben geschnitten wird. Auf die Backoberfläche wird eine Füllung aufgetragen, um eine Pizza herzustellen. Diese Pizza kann gefroren und anschließend aufgebacken werden.

Die EP 2138285 A1 beschreibt ein Verfahren zur Herstellung von Honigkuchen ohne Kruste, bei dem Kruste von Seitenflächen des Honigkuchens durch rotierende Schneidwerkzeuge entfernt wird.

Die DE 19924776 C2 beschreibt ein Verfahren und eine dafür geeignete Vorrichtung zum Abschneiden einer Scheibe von einem Tortenbodenstrang, der gegen einen Anschlag fällt und in einem Abstand zum Anschlag abgeschnitten wird. Der von dem Tortenbodenstrang abgeschnittene axiale Abschnitt wird dann, beispielsweise nach Beschichtung mit Sahnecreme, zu einer Torte gestapelt.

Die DE 29712265 U1 beschreibt Vorrichtung und Verfahren zum Abschneiden eines oberflächennahen Anteils eines Brotlaibs, der vor dem Schneiden dadurch herausgehoben wird, dass zwei Kanten des Brotlaibs herunter gedrückt werden. Nach Entlastung des Brotlaibs ergibt sich so eine Vertiefung, die von der Schnittfläche gebildet wird und von Brotkrustenrändern umgeben ist. Die Vertiefung soll anschließend mit Snackfüllung gefüllt werden.

Die DE 3306272 A1 beschreibt das Herstellen von Ausnehmungen in Backwaren durch Entfernen des gebackenen Teigs oder Eindrücken eines Stempels.

Das in Bezug genommene Hauptpatent DE 3200050 beschreibt, dass die solchermaßen hergestellten schalenförmigen Backwaren paarweise zusammengefügt werden können, um einen Hohlraum zu bilden, in den dann Speisen eingefüllt werden können.

### Aufgabe der Erfindung

Gegenüber dem bekannten Stand der Technik ist es die Aufgabe der vorliegenden Erfindung, ein alternatives Verfahren zur kontinuierlichen Herstellung flacher Backwaren bereitzustellen, sowie eine Vorrichtung zur Durchführung des Verfahrens und mit dem Verfahren hergestellte flache Backwaren, die sich vorzugsweise durch bessere sensorische Eigenschaften auszeichnen.

### Allgemeine Beschreibung der Erfindung

Die Erfindung löst diese Aufgabe durch Bereitstellen eines Herstellungsverfahrens und einer Vorrichtung für das Herstellungsverfahren gemäß den Ansprüchen, mit denen flache Teiglinge, insbesondere Pizzaböden hergestellt werden, mit denen auch bei Verwendung eines Trennmittels zwischen Teigling und Formunterlage bzw. Backunterlage ein Teigling hergestellt wird, der unmittelbar nach dem Backen geschlossene obere und untere Oberflächen aufweist, und schließlich eine offenporige erste Oberfläche, beispielsweise als Unterseite aufweist. Bevorzugt weist das Verfahren keinen Schritt und keine Einrichtung für die Kühlung des rohen und/oder des gebackenen Teiglings vor dem Ablösen des Teiglings von der Unterlage auf Teiglinge werden vorzugsweise aus Teigmasse auf Mehlbasis hergestellt, die vorzugsweise in Mischung mit Mehl und Wasser ein Treibmittel enthält, z.B. Hefe und/oder ein Carbonat, weiter bevorzugt Fett. Optional können weitere Komponenten wie Geschmacks-, Farb- und Aromastoffe, Fruchtsäuren, Stärke, Salz, Enzyme und Emulgatoren zugesetzt werden.

Teiglinge erhalten durch das Backen Backoberflächen, die auch als Backhäute bezeichnet werden können, nämlich eine erste Backoberfläche oder Backhaut, die zusätzlich zur Teigmasse bzw. Krume eingebrachtes Trennmittels aufweisen kann, die in Kontakt mit der Backunterlage gebacken ist, und eine gegenüberliegende zweite Backoberfläche oder Backhaut, die üblicherweise im Ofen nur von Luft kontaktiert wird, sowie eine die erste und zweite Backoberfläche verbindende Randoberfläche, die den Teigling umfänglich begrenzt. Entsprechend sind erfindungsgemäß bevorzugt Teiglinge zumindest halbgebackene, insbesondere zu ca. 50 bis 75% gebackene, vorzugsweise vollständig gebackene Teiglinge, die z.B. durch Backen für eine kürzere Zeitdauer und/oder bei niedrigerer Temperatur herstellbar sind, als für das vollständige Backen erforderlich wären, z.B. durch Backen für 50 bis 75% der Zeitdauer, die für das vollständige Backen bei derselben Temperatur erforderlich ist. Bevorzugt sind teilgebackene Teiglinge dadurch definiert, dass deren Gerüstbildung durch Quellung der Stärke abgeschlossen ist und die beim Backen auftretende Maillard-Reaktion, z.B. bis zur Bräunung und Entstehung typischer Backaromen, noch nicht vollständig abgeschlossen ist, bzw. der teilgebackene Teigling noch reaktive Verbindungen aufweist, die beim anschließenden Aufbacken, insbesondere im Anschluß an Kühlung bzw. Einfrieren, die Maillard-Reaktion ablaufen lassen. Generell bevorzugt sind Teiglinge aus Hefeteig, z.B. im wesentlichen aus Weizenmehl. Die Erfindung bezieht sich daher auch auf die Verwendung des Verfahrens zur Herstellung teilgebackener Teiglinge, bzw. auf die Verwendung erfindungsgemäßer Teiglinge, die insbesondere mit dem Verfahren hergestellt sind, zum Fertigbacken.

Bei der Vorbereitung der Erfindung wurde festgestellt, dass Mehl als Trennmittel zu einer Verfestigung der ersten Backoberfläche von Teiglingen führt und diese erste Backoberfläche bei neuerlichem Aufbacken, z.B. nach Kühlen oder Gefrieren erhalten bleibt. Bei der Vorbereitung der Erfindung wurde festgestellt, dass diese Verfestigung der ersten Backoberfläche durch Trennmittel für den Geschmack bzw. die Konsistenz des Teiglings und der damit hergestellten Pizza nachteilig ist.

Erfindungsgemäß ist vorgesehen, von einem gebackenen Teigling eine Backoberfläche in zumindest einer Schicht durch Abtragen bzw. Schneiden zu entfernen, wodurch der gebackene Teigling die Schnittfläche als seine erste Oberfläche mit offenporiger Struktur erhält. Bevorzugt wird genau eine der einander gegenüberliegenden Backoberflächen entfernt, während die gegenüberliegende Backoberfläche erhalten bleibt, auf die eine Beschichtungsmasse aufgetragen wird. Entsprechend weisen erfindungsgemäße Teiglinge bevorzugt eine Backoberfläche mit einem Gehalt an Trennmittel auf, das z.B. zusätzlich zum Teig eingebrachtes Mehl auf, während die der Backoberfläche gegenüberliegende Oberfläche zumindest anteilig, vorzugsweise vollständig offenporig ist.

Überraschenderweise hat sich herausgestellt, dass sich beim Entfernen einer Backoberfläche eines gebackenen Teiglings, beispielsweise aus Hefeteig, eine erste Oberfläche ergibt, die einen höheren Anteil an Poren aufweist, als sie mit anderen Herstellungsverfahren erzeugt wird, beispielsweise im Vergleich zu Teiglingen, die durch Auswalzen oder Pressen von Hefeteig auf eine Unterlage und anschließendes Backen erhalten werden. Besonders bevorzugt wird eine Backoberfläche im Wesentlichen über ihre vollständige Erstreckung, z.B. vollständig in der Ebene entfernt, in der sich die Backoberfläche erstreckt, insbesondere bis zu ihren Rändern, wahlweise bis in ihre Ränder oder einschließlich ihrer Ränder.

Der sehr große Anteil von oberflächlich zugänglichen Poren in der ersten Oberfläche erfindungsgemäß hergestellter gebackener Teiglinge ist insbesondere zur Verwendung bei Backwaren vorteilhaft, die mit zwischenzeitlicher Kühlung, insbesondere zwischenzeitlichern Einfrieren, anschließend nochmals aufgebacken werden, wie beispielsweise bei so genannten Fertig- oder Tiefkühlpizzas. Denn die erfindungsgemäß hergestellte Struktur der ersten Oberfläche gebackener Teiglinge ergibt beim späteren Aufbacken eine besonders krosse Oberfläche. Die besonderen sensorischen Eigenschaften erfindungsgemäß hergestellter gebackener Teiglinge lassen sich im objektivierten Sensoriktest nachweisen, insbesondere gegenüber Teiglingen aus identischem Teig, die mit dem gleichen Verfahren hergestellt urden, jedoch ohne das erfindungsgemäße Entfernen einer Backoberfläche.

. Die erste Backoberfläche kann in dünner Schicht, z.B. um 1 bis 20% von der Dicke des Teiglings, die zwischen der ersten Backoberfläche (2) und der zweiten Backoberfläche (3) gemessen ist, insbesondere beispielsweise um 0,2 bis 4 mm, bevorzugt ca. 0,5 bis 2,0 mm abgetragen werden.

Insbesondere bei Herstellungsverfahren, bei denen die erste Backoberfläche des Teiglings, die beim Ausbreiten des rohen Teigs zu einer flachen Schicht auf der Pressunterlage bzw. beim Backen auf einer Backunterlage angeordnet war, mit einem Trennmittel, insbesondere Mehl versehen ist, führt das erfindungsgemäße Verfahren zur vollständigen oder anteiligen Entfernung der Backoberfläche und dadurch zur Erzeugung einer kontinuierlichen bzw. einer diskontinuierlichen, mit Anteilen von Backoberfläche durchsetzten, offenporigen ersten Oberfläche. Die zumindest anteilig offenporige erste Oberfläche erfindungsgemäßer Teiglinge ist daher eine kontinuierliche oder diskontinuierliche Schnittfläche und nicht durch direkten Kontakt mit einer Press- oder Backunterlage erzeugt worden.

Das erfindungsgemäße Herstellungsverfahren kann auch vorsehen, Teig durch Walzen auf eine Pressunterlage auszubringen, wobei zwischen Teig und Pressunterlage ein Trennmittel angeordnet wird, Teiglinge ausgestochen werden und vor dem Backen Teig zwischen den ausgestochenen rohen Teiglingen entfernt wird, beispielsweise abgehoben wird. Die rohen Teiglinge können einschließlich des Trennmittels anschließend gebacken werden und weisen zunächst auf ihrer ersten Backoberfläche eine verhältnismäßig dichte Schicht aus gepresstem Teig in Mischung mit Trennmittel auf. Im Anschluss an das Backen wird erfindungsgemäß eine Backoberfläche, vorzugsweise die erste Backoberfläche einschließlich des darin enthaltenen Trennmittels, zumindest anteilig in einer Schicht entfernt und die Teiglinge können wahlweise anschließend mit weiteren Lebensmitteln beschichtet werden, vorzugsweise auf der Backoberfläche, die der Schnittfläche gegenüberliegt.

Beschichtungsmassen können eine wässrige Basis haben, wie beispielsweise Tomatensoße, oder Fett-Wasser-Emulsion als Basis, wie beispielsweise eine Käsemasse für Flammkuchen. Das erfindungsgemäße Verfahren sieht vorzugsweise vor, den Teig beim Ausbreiten auf eine Press- oder Backunterlage sowohl auf der ersten Oberfläche, die an die Press- oder Backunterlage angrenzt und nach dem Backen die erste Backoberfläche bildet, als auch optional auf der zweiten Oberfläche, die der ersten Oberfläche gegenüber liegt, mit einem Trennmittel, insbesondere Mehl zu beschichten. Denn die durch das Trennmittel erzeugte geschlossene erste Backoberfläche wird durch das erfindungsgemäße Entfernen der ersten Backoberfläche vom gebackenen Teigling abgetrennt, so dass der an die erste Backoberfläche angrenzende Teil des Teiglings als Schnittfläche freigelegt wird und die offenporige erste Oberfläche bildet.

Die Geschlossenheit der zweiten Oberfläche reduziert das Eindringen einer anschließend aufgetragenen Beschichtungsmasse in den Teigling signifikant. Entsprechend ist es bevorzugt, dass der Teigling gegenüber der offenporigen ersten Oberfläche, die durch Entfernen der ersten Backoberfläche erzeugt wurde, eine Backoberfläche aufweist.

Das erfindungsgemäße Verfahren kann zur Erzeugung einer Teigstruktur mit kurzem Biss wahlweise vorsehen, gebackene Teiglinge vor dem Entfernen der ersten Backoberfläche zu pressen. Für das Pressen der gebackenen Teiglinge können Pressstempel verwendet werden, die gebackene Teiglinge gegen eine Pressunterlage drücken, oder eine oder mehrere Presswalzen, die gebackene Teiglinge gegen eine Pressunterlage drücken.

Als Fräswalze kann eine Fließmaschine verwendet werden, die aus der Fleischindustrie zur Entfernung dünner Oberflächenschichten bekannt ist. Alternativ kann als Fräswalze eine mit Draht bestückte Rolle oder Walze die erste Oberfläche nach dem Backen durch Entfernen der Backhaut einschließlich eines Trennmittels im erfindungsgemäßen Verfahren modifizieren und eine offenporige erste Oberfläche herstellen.

Die Vorrichtung kann eine Einrichtung zum Bereitstellen gebackener, gepresster oder ungepresster Teiglinge aufweisen, vorzugsweise einen kontinuierlich arbeitenden Ofen mit einem Transportband, das gebackene Teiglinge zur Schneideinrichtung transportiert. Zwischen Ofen und Schneideinrichtung kann in einem Abstand zum Transportband, vorzugsweise oberhalb des Transportbands, eine Presseinrichtung angeordnet sein, vorzugsweise eine Presswalze. Die Presseinrichtung ist in einem Abstand vom Transportband angeordnet, der geringer als der Abstand der ersten von der zweiten Oberfläche der Teiglinge ist, d.h. geringer als die Dicke der Teiglinge. Bei dieser Ausführungsform dient das Transportband zwischen Ofen und Schneideinrichtung als Pressunterlage für eine Presswalze, die vorzugsweise mit ihrer Achse senkrecht zur Transportrichtung des Transportbands angeordnet ist, oder in einem Winkel von 60 bis 90° zur Förderrichtung des Transportbands. In den Ausführungsformen der Erfindung kann vorgesehen sein, dass eine Presswalze Teil einer Andruck- und Transporteinrichtung ist, die abschnittsweise gegenüber der Schneideinrichtung angeordnet ist. In einer solchen Ausführungsform ist die Andruck- und Transporteinrichtung vorzugsweise ein Transportband, das in einem Abschnitt parallel und beabstandet zum ersten Transportband mit gleicher Förderrichtung angeordnet ist. Diese Andruck- und Transporteinrichtung ist zumindest in dem Pressabschnitt, in dem sie einen Abschnitt der ersten Transporteinrichtung überdeckt, in einem geringeren Abstand zum ersten Transportband angeordnet, als der Abstand zwischen erster und zweiter Backoberfläche der gebackenen Teiglinge, beispielsweise im Bereich ihrer Umlenkrolle, die in Transportrichtung vor der Schneideinrichtung angeordnet ist. Der Abschnitt der Andruck- und Transporteinrichtung, der in einem Abstand zur Schneideinrichtung dieser gegenüber angeordnet ist, kann größer als der Abstand des Pressabschnitts zur ersten Transporteinrichtung sein, um den Teigling mit geringerem Druck gegen die Schneideinrichtung zu führen, als gegen die erste Transporteinrichtung.

Die Erfindung wird nun genauer mit Bezug auf die Figuren und anhand eines Beispiel beschrieben. Die Figuren zeigen schematisch
- in Figur 1 eine erfindungsgemäße Vorrichtung, die durch eine Transporteinrichtung mit gebackenen, gepressten oder ungepressten Teiglingen beschickt wird,
- in Figur 2 eine alternative Ausführungsform der Vorrichtung von Figur 1, und
- in Figur 3 in Vergrößerung zum Vergleich unter A) die Oberfläche eines durch Auswalzen von Teig auf einer mit Mehl bestreuten Oberfläche eines Förderbands und anschließendes Backen hergestellten Vergleichsteiglings, unter B) die Oberfläche eines erfindungsgemäßen Teiglings, der der im Anschluss an das Backen oberflächlich gehobelt wurde.

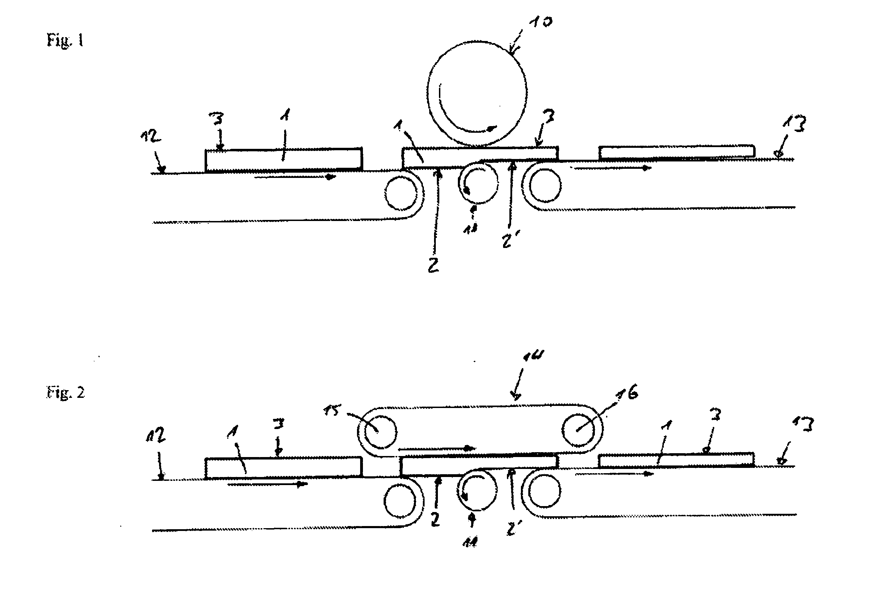

Die in den Figuren 1 und 2 gezeigten Ausführungsformen zeigen die Abtrag- bzw. Schneideinrichtung jeweils als Hobel- oder Fräswalze 11.

Figur 1 zeigt eine Vorrichtung zur erfindungsgemäßen Herstellung eines Teiglings 1, dessen erste Backoberfläche 2 auf einer Backunterlage während des Backens angeordnet war, und eine der ersten Backoberfläche 2 gegenüberliegende zweite Backoberfläche 3 aufweist. Der Teigling 1 wird durch eine erste Andruck- und Transporteinrichtung 10, vorliegend als Andruckwalze ausgeführt, gegen eine Abtrageinrichtung gedrückt, die als Hobel- oder Fräswalze 11 ausgestaltet ist. Für den Transport des Teiglings 1 in den Zwischenraum, um den die erste Andruck- und Transporteinrichtung 10 und die Hobel- oder Fräswalze 11 beabstandet sind, sorgt eine erste Transporteinrichtung 12. Die erste Andruck- und Transporteinrichtung 10 ist gleichgerichtet mit der ersten Transporteinrichtung 12 angetrieben, während die Hobel- oder Fräswalze 11 gleichgerichtet oder entgegengesetzt zur Transportrichtung angetrieben ist. Die Hobel- oder Fräswalze 11 entfernt die erste Backoberfläche 2 des Teiglings 1 in dünner Schicht und erzeugt dadurch eine offenporige erste Oberfläche 2' des Teiglings 1. In Transportrichtung nach der Hobel- oder Fräswalze 11 angeordnet ist eine zweite Transporteinrichtung 13, hier als Förderband dargestellt.

Als Alternative zur Andruck- und Transporteinrichtung 10 als Walze kann die erfindungsgemäße Vorrichtung ein zweites Andruck- und Transportband 14 aufweisen. Ein solches zweites Andruck- und Transportband 14 kann um eine erste Umlenkwelle 15 und eine zweite Umlenkwelle 16 laufen und den Teigling 1 dadurch von der ersten Transporteinrichtung 12 zur Hobel- und Fräswalze 11 transportieren, dass der dem ersten Transportband 12 beabstandet gegenüberliegende Abschnitt des Andruck- und Transportbands 14 gleichgerichtet mit dem ersten Transportband 12 angetrieben ist. Die erste Umlenkwelle 15 kann in einem geringen Abstand gegen die Oberfläche des ersten Transportbands 12 angeordnet sein, als die Dicke des Teiglings 1 zwischen seiner ersten 2 und seiner zweiten Backoberfläche 3 beträgt und in diesem Pressabstand als Presswalze wirken, wobei die Oberfläche des ersten Transportbands 12 als Pressunterlage wirkt. Die zweite Umlenkrolle 16 des Andruck- und Transportbands 14 ist vorzugsweise etwa gegenüber der Hobel- oder Fräswalze 11 in einem Abstand angeordnet, oder ist, wie in Figur 2 gezeigt, in einem Abstand parallel zur Transportrichtung zur Hobel - oder Fräswalze 11 in Förderrichtung hinter der Hobel- oder Fräswalze 11 angeordnet.

Bei Ausführung der Andruck- und Transporteinrichtung als Förderband 14 kann der Abstand zwischen dem Abschnitt des Bandes, das gegenüber der Hobel- oder Fräswalze 11 angeordnet ist, vom Abstand des Abschnitts des Bandes 14 abweichen, in dem es um die erste Umlenkwelle 15 vom ersten Transportband 12 entfernt ist. Insbesondere, wenn der Abschnitt des zweiten Andruck- und Transportbands 14, der um die erste Umlenkwelle 15 läuft, in einem Pressabstand mit geringerem Abstand zum ersten Transportband 12 angeordnet ist, als die Dicke des Teiglings 1 beträgt, kann der Abstand des zweiten Andruck- und Transportbands 14 zur Hobel- oder Fräswalze 11 größer sein, um beispielsweise einen Anteil des Betrags einer elastischen Rückstellung des Teiglings 1 nach Durchlaufen der Presseinrichtung.

### Beispiel: Pizza mit Teigling als Boden

Für die Bewertung erfindungsgemäß hergestellter Teiglinge wurden identisch belegte Pizzas im objektivierten Verfahren getestet, deren Böden aus demselben Hefeteig nach dem erfindungsgemäßen Verfahren oder zum Vergleich anders hergestellt wurden. Als Vergleich wurden Pizzas mit vorgebackenen Böden hergestellt, die beidseitig Backoberflächen aufwiesen.

Der Vergleichsboden wurde durch Auswalzen eines Teigs auf einem Transportband mit Mehl als Trennmittel, Ausstechen von Teiglingen, Entfernen von Teig zwischen den ausgestochenen Teiglingen und anschließendes Backen auf dem Transportband hergestellt. Der erfindungsgemäße Boden wurde wie der Vergleichsboden hergestellt, jedoch mit dem Schritt des Abfräsens einer Schicht von ca. 0,5 bis 2,0 mm von der Unterseite, die als erste Backoberfläche auf dem Transportband erhalten wurde. Für das Abfräsen wurde eine Fräswalze verwendet, die entgegen der Laufrichtung einer beabstandeten Andruck- und Transportwalze rotierte und mit Fräsvorsprüngen versehen war.

Eine mikroskopische Analyse der ersten Oberflächen der Teiglinge, die ohne weitere Bearbeitung durch Beschichten mit Belägen zur Herstellung von Pizza eingesetzt wurden, zeigt die offengelegten Poren der ersten Oberfläche des erfindungsgemäßen Teiglings.

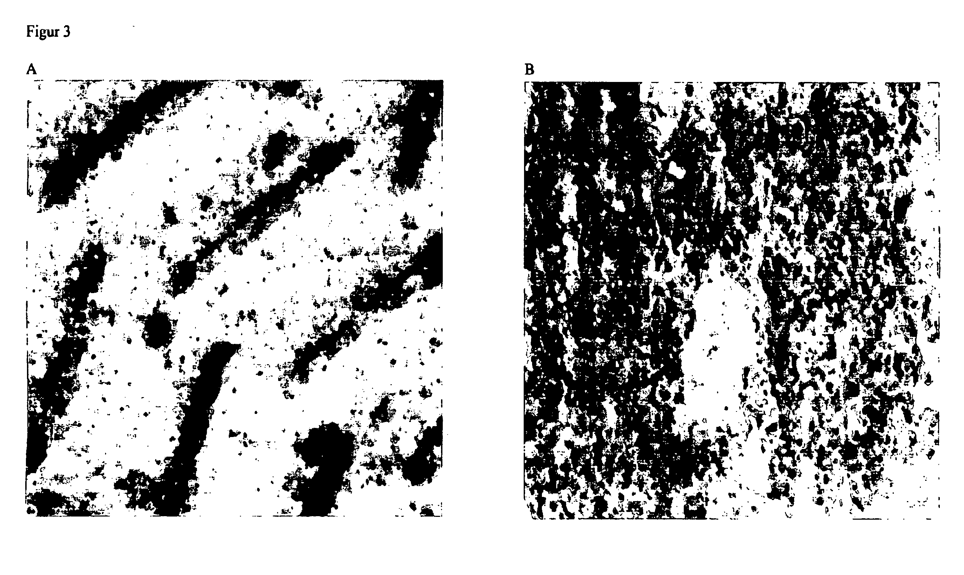

Figur 3A zeigt in etwa dreifacher Vergrößerung eine Aufsicht auf die erste Oberfläche des Vergleichsteiglings. Diese Oberfläche ist im wesentlichen geschlossen, ohne Poren in der Größe von Gasblasen und weist strichförmig eingelassene Anteile auf, die durch das Gitterband eingedrückt wurden.

Figur 3B zeigt in gleicher Vergrößerung die erste Oberfläche des erfindungsgemäßen Teiglings und macht die offenporige erste Oberfläche deutlich, in der Poren in der Schnittfläche angeordnet sind und die Porenwände aneinander angrenzen. Der Bereich der Oberfläche, in dem etwa mittig in Figur 6B ein geschlossener Oberflächenanteil sichtbar ist, entspricht einem Abschnitt der Backhaut, der in den Teigling eingelassen war und von der Fräswalze nicht entfernt wurde. Die Böden wurden anschließend identisch mit Pizzabelag beschichtet, gekühlt und aufgebacken.

Pizzas mit Teiglingen, wie sie in Figur 3 gezeigt sind, wurden gekühlt und aufgebacken, wie dies bei Kühl- und Tiefkühlpizza üblich ist. Die Ergebnisse der sensorischen Untersuchung, die im objektivierten Blindtest mit 66 Testpersonen durchgeführt wurde, sind in der nachfolgenden Tabelle zusammengefasst.

### Ergebnis des Sensoriktests

| Kriterium: | Pizza mit erstem Vergleichsboden | Pizza mit erfindungsgemäß hergestelltem Boden |
|---|---|---|
| Geschmack: | SK = 90 % | SK = 96 %* |
| | MW = 7,4 | MW = 7,7* |
| Gesamtgefallen: | SK = 90 % | SK = 96 % |
| | MW = 7,5 | MW = 7,6 |
| Gefallen Boden: | SK = 80 % | SK = 92 %* |
| | MW = 7,1 | MW = 7,6* |
| Beurteilung Knusprigkeit Boden: | SK = 68% | SK = 86%* |
| | MW = 4,4 | MW = 5,3* |

| | | |
|---|---|---|
| ***** Unterschiede sind signifikant, MW = Mittelwert der Beurteilung auf einer 9er Skala, 1= schlechteste Bewertung, 9 = beste Bewertung SK = % der Bewertungen in den 3 Spitzenklassen von 9 Klassen | | |

Als Ergebnis des Sensoriktests kann festgehalten werden, dass Pizzas mit erfindungsgemäß hergestellten Teiglingen als Böden signifikant bessere Beurteilungen erhielten, als Pizzas mit Vergleichsböden.

### Bezugszeichenliste

1 Teigling
2 erste Backoberfläche
2' Schnittfläche
3 zweite Backoberfläche
11 Hobel- oder Fräswalze
12 erste Transporteinrichtung / erstes
Transportband
13 zweite Transporteinrichtung
15 erste Umlenkwelle
16 zweite Umlenkwelle

## Patentansprüche

1. Verfahren zur kontinuierlichen Herstellung flacher Backwaren mit offenporiger erster Oberfläche als Unterseite durch Backen vorgeformter roher Teiglinge auf einer Backunterlage zu gebackenen Teiglingen (1), die eine durch das Backen erzeugte flache erste Backoberfläche (2) und eine etwa parallele gegenüberliegende zweite flache Backoberfläche (3) aufweisen, **gekennzeichnet dadurch, dass** die rohen Teiglinge durch Auswalzen rohen Teigs auf eine Backunterlage, Ausscheiden der Teiglinge und Entfernen von Teig zwischen ausgeschnittenen rohen Teiglingen hergestellt werden und
die erste Backoberfläche (2) durch Fräsen oder Hobeln zumindest anteilig entfernt wird und die erste Oberfläche ergibt, wobei die erste Backoberfläche (2) bis in eine zur zweiten Backoberfläche (3) parallele Ebene abgetragen wird und
eine Beschichtungsmasse auf die zweite Backoberfläche (3) aufgetragen wird.

2. Verfahren nach Anspruch 1, **dadurch gekennzeichnet, dass** zwischen dem rohen Teig und der Unterlage ein Trennmittel angeordnet wird

3. Verfahren nach einem der voranstehenden Ansprüche, **dadurch gekennzeichnet, dass** das Abtragen um 1 bis 20% von der Dicke des Teiglings, gemessen zwischen der ersten Backoberfläche (2) und der zweiten Backoberfläche (3), erfolgt.

4. Verfahren nach einem der voranstehenden Ansprüche, **dadurch gekennzeichnet, dass** die erste Backoberfläche (2) diejenige ist, die während des Backens in Kontakt mit der Backunterlage stand.

5. Verfahren nach einem der voranstehenden Ansprüche, **dadurch gekennzeichnet, dass** die erste Backoberfläche (2) uneben ist und Anteile aufweist, die außerhalb der Schnittebene in der Krume angeordnet sind.

6. Verfahren nach einem der voranstehenden Ansprüche, **dadurch gekennzeichnet, dass** die gebackenen Teiglinge nach dem Backen und vor und/oder nach Entfernen der ersten Backoberfläche (2) gepresst werden.

7. Verfahren nach Anspruch 6, **dadurch gekennzeichnet, dass** die gebackenen Teiglinge (1) durch Transportieren zwischen einer Presswalze und einer Pressunterlage gepresst werden.

8. Verwendung eines Verfahrens nach einem der voranstehenden Ansprüche zur Herstellung flacher Backwaren mit offenporiger erster Oberfläche als Unterseite, die im Anschluss an die Herstellung mit einer Beschichtungsmasse beschichtet, gekühlt und dann aufgebacken werden.

9. Vorrichtung zur kontinuierlichen Herstellung flacher Backwaren mit offenporiger erster Oberfläche als Unterseite mit einer Einrichtung zur Bereitstellung gebackener flacher Teiglinge (1) und einer ersten Transporteinrichtung (12) zum Transport der gebackenen Teiglinge (1), **gekennzeichnet durch** eine anschließend an die erste Transporteinrichtung (12) angeordnete Fräs- oder Hobeleinrichtung (11) und eine zu dieser beabstandeten ersten Andruck- und Transporteinrichtung (10), wobei im Anschluss an die Fräs- oder Hobeleinrichtung (11) eine Auftragseinrichtung für das Auftragen von Beschichtungsmasse auf die der Schnittfläche 2' gegenüberliegende Backoberfläche (3) der Teiglinge (1) angeordnet ist.

10. Vorrichtung nach Anspruch 9, **dadurch gekennzeichnet, dass** die erste Andruck- und Transporteinrichtung (10) gegenüber der Fräs- oder Hobeleinrichtung (11) angeordnet ist und die Fräs- oder Hobeleinrichtung (11) gleichgerichtet oder entgegengesetzt zur ersten Andruck- und Transporteinrichtung (10) antreibbar ist.

11. Vorrichtung nach Anspruch 9 oder 10, **dadurch gekennzeichnet, dass** die erste Andruck- und Transporteinrichtung (10) eine Walze ist.

12. Vorrichtung nach einem der Ansprüche 9 bis 11, **dadurch gekennzeichnet, dass** die Andruck- und Transporteinrichtung (10) ein Transportband mit einer in einem ersten Abstand gegenüber der ersten Transporteinrichtung (12) angeordneten ersten Umlenkwelle (15) und einer in einem zweiten Abstand gegenüber der Fräs- oder Hobeleinrichtung (11) angeordneten zweiten Umlenkwelle (16) ist.

13. Vorrichtung nach einem der Ansprüche 9 bis 12, **dadurch gekennzeichnet, dass** an der ersten Transporteinrichtung (12) eine Presseinrichtung zum Pressen der gebackenen Teiglinge (1) angeordnet ist.

14. Vorrichtung nach Anspruch 13, **dadurch gekennzeichnet, dass** die erste Umlenkwelle (15) die Presseinrichtung ist, und der erste Abstand kleiner als der zweite Abstand ist.

15. Vorrichtung nach einem der Ansprüche 9 bis 14, **dadurch gekennzeichnet, dass** die Einrichtung zur Bereitstellung gebackener flacher Teiglinge (1) ein kontinuierlicher Backofen ist.

## Claims

1. Method for continuous production of flat bakery products with an open-pore first surface as underside by baking of preshaped raw dough bodies on a baking substrate to form baked dough bodies (1), which have a flat first baked surface (2) produced by the baking and an approximately parallel opposite second flat baked surface (3), **characterised in that** the raw dough bodies are produced by rolling out raw dough on a baking substrate, cutting out the dough bodies and removal of dough between cut-out raw dough bodies and the first baked surface (2) is removed, at least proportionally, by milling or planing and provides the first surface, wherein the first baked surface (2) is removed up to a plane parallel to the second baked surface (3) and a coating material is coated on the second baked surface (3).

2. Method according to claim 1, **characterised in that** a separating agent is arranged between the raw dough and the substrate.

3. Method according to one of the preceding claims, **characterised in that** the removal is carried out by 1 to 20% of the thickness of the dough body as measured between the first baked surface (2) and the second baked surface (3).

4. Method according to one of the preceding claims, **characterised in that** the first baked surface (2) is that which was in contact with the baking substrate during the baking.

5. Method according to any one of the preceding claims, **characterised in that** the first baked surface (2) is uneven and has parts which are arranged outside the section plane in the crumb.

6. Method according to any one of the preceding claims, **characterised in that** the baked dough body is pressed after the baking and before and/or after removal of the first baked surface (2).

7. Method according to claim 6, **characterised in that** the baked dough bodies (1) are pressed by transporting between a pressing roller and a pressing substrate.

8. Use of the method according to any one of the preceding claims for producing flat bakery products with an open-pore first surface as underside, which subsequently to production are coated with a coating material, cooled and then baked on.

9. Device for continuous production of flat bakery products with an open-pore first surface as underside with equipment for providing baked flat dough bodies (1) and first transport equipment (12) for transport of the baked dough bodies (1), **characterised by** milling or planing equipment (11) arranged downstream of the first transport equipment (12) and first pressing and transporting equipment (10) spaced therefrom, wherein coating equipment for the coating of coating material on the baked surface (3), which is opposite the cut surface (2'), of the dough bodies (1), is arranged downstream of the milling or planing equipment (11).

10. Device according to claim 9, **characterised in that** the first pressing and transporting equipment (10) is arranged opposite the milling or planing equipment (11) and the milling or planing equipment (11) is drivable in the same direction or oppositely to the first pressing and transporting equipment (10).

11. Device according to claim 9 or 10, **characterised in that** the first pressing and transporting equipment (10) is a roller.

12. Device according to any one of claims 9 to 11, **characterised in that** the pressing and transporting equipment (10) is a transport belt with a first deflecting shaft (15), which is arranged at a first spacing relative to the first transport equipment (12), and a second deflecting shaft (16), which is arranged at a second spacing relative to the milling or planing equipment (11).

13. Device according to any one of claims 9 to 12, **characterised in that** pressing equipment for pressing the baked dough bodies (1) is arranged at the first transport equipment (12).

14. Device according to claim 13, **characterised in that** the first deflecting shaft (15) is the pressing equipment and the first spacing is smaller than the second spacing.

15. Device according to any one of claims 9 to 14, **characterised in that** the equipment for providing baked flat dough bodies (1) is a continuous baking oven.

## Revendications

1. Procédé de fabrication, en continu, d'articles de boulangerie aplatis dotés d'une première surface à pores ouverts qui constitue une face inférieure, par cuisson au four de pâtons crus préformés, sur un support de cuisson, pour obtenir des pâtons cuits (1) qui comprennent une première face de cuisson (2) aplatie, résultant de la cuisson au four, et une seconde face de cuisson (3) aplatie, sensiblement parallèle et tournée à l'opposé, **caractérisé par le fait que** les pâtons crus sont produits par cylindrage de pâte crue sur un support de cuisson, par débitage desdits pâtons et par élimination de pâte entre des pâtons crus sectionnés,
la première face de cuisson (2) est, au moins partiellement, éliminée par fraisage ou rabotage et procure la première surface, ladite première face de cuisson (2) étant rognée jusque dans un plan parallèle à la seconde face de cuisson (3), et
une masse d'enduction est déposée sur ladite seconde face de cuisson (3).

2. Procédé selon la revendication 1, **caractérisé par le fait qu'**un agent de séparation est interposé entre la pâte crue et le support.

3. Procédé selon l'une des revendications précédentes, **caractérisé par le fait que** le rognage est effectué à raison de 1 à 20 % de l'épaisseur du pâton, mesurée entre la première face de cuisson (2) et la seconde face de cuisson (3).

4. Procédé selon l'une des revendications précédentes, **caractérisé par le fait que** la première face de cuisson (2) est la face qui était en contact avec le support de cuisson lors de la cuisson au four.

5. Procédé selon l'une des revendications précédentes, **caractérisé par le fait que** la première face de cuisson (2) est dépourvue de planéité et comporte des régions partielles situées, dans la mie, à l'extérieur du plan de sectionnement.

6. Procédé selon l'une des revendications précédentes, **caractérisé par le fait que** les pâtons cuits sont soumis à compression à l'issue de la cuisson au four, et avant et/ou après l'élimination de la première face de cuisson (2).

7. Procédé selon la revendication 6, **caractérisé par le fait que** les pâtons cuits (1) sont soumis à compression par convoyage entre un cylindre presseur et un support de compression.

8. Application d'un procédé conforme à l'une des revendications précédentes, pour la fabrication continue d'articles de boulangerie aplatis, dotés d'une première surface à pores ouverts qui constitue une face inférieure, sachant que, dans l'enchaînement direct de la production, lesdits articles sont revêtus d'une masse d'enduction, refroidis, puis cuits au four.

9. Dispositif de fabrication, en continu, d'articles de boulangerie aplatis dotés d'une première surface à pores ouverts qui constitue une face inférieure, comprenant un système d'apprêtage de pâtons aplatis (1) cuits au four, et un premier système de convoyage (12) conçu pour convoyer lesdits pâtons cuits (1), **caractérisé par** un dispositif (11) de fraisage ou de rabotage, placé dans la continuité directe du premier système de convoyage (12), et par un premier système (10) de compression et de convoyage, situé à distance du dispositif précité, un système de déversement étant implanté dans la continuité directe dudit dispositif (11) de fraisage ou de rabotage, en vue de déposer une masse d'enduction sur la face de cuisson (3) des pâtons (1) qui est tournée à l'opposé de la face sectionnée (2').

10. Dispositif selon la revendication 9, **caractérisé par le fait que** le premier système (10) de compression et de convoyage se trouve en vis-à-vis du dispositif (11) de fraisage ou de rabotage et ledit dispositif (11) de fraisage ou de rabotage peut être entraîné dans le même sens que ledit premier système (10) de compression et de convoyage, ou en sens inverse.

11. Dispositif selon la revendication 9 ou 10, **caractérisé par le fait que** le premier système (10) de compression et de convoyage est un cylindre.

12. Dispositif selon l'une des revendications 9 à 11, **caractérisé par le fait que** le système (10) de compression et de convoyage est une bande convoyeuse pourvue d'un premier arbre de renvoi (15), situé à une première distance du premier système de convoyage (12), et d'un second arbre de renvoi (16) situé à une seconde distance du dispositif (11) de fraisage ou de rabotage.

13. Dispositif selon l'une des revendications 9 à 12, **caractérisé par le fait qu'**un système presseur, dévolu à la compression des pâtons cuits (1), est implanté sur le premier système de convoyage (12).

14. Dispositif selon la revendication 13, **caractérisé par le fait que** le premier arbre de renvoi (15) constitue le système presseur, et la première distance est plus petite que la seconde distance.

15. Dispositif selon l'une des revendications 9 à 14, **caractérisé par le fait que** le système, dédié à l'apprêtage de pâtons aplatis (1) cuits au four, est un four de cuisson en continu.
